# EUROPEAN PATENT SPECIFICATION

(11) **EP 4 261 026 B1**
(45) Date of publication and mention of the grant of the patent: **30.10.2024**
(21) Application number: 23167081.1
(22) Date of filing: 06.04.2023
(51) Int. Cl.: B29D 99/00, B68G 7/04, B68G 7/06, D04H 1/54, D04H 1/70, B29C 43/48, B29C 43/46, B29K 105/08, B29K 105/26, B29L 31/58, D04H 1/46, D04H 1/593

(54) **MACHINE AND METHOD FOR FORMING MATTRESSES OR PANELS FROM NON-SOLID MATERIAL**
MASCHINE UND VERFAHREN ZUR HERSTELLUNG VON MATRATZEN ODER PLATTEN AUS NICHTFESTEM MATERIAL
MACHINE ET PROCÉDÉ POUR FORMER DES MATELAS OU DES PANNEAUX À PARTIR D'UN MATÉRIAU NON SOLIDE

(30) Priority: 15.04.2022 IT 202200007643
(43) Date of publication of application: 18.10.2023
(73) Proprietor: Technoplants S.R.L., 59100 Prato (IT)
(72) Inventor: GUALTIERI, Marco, Prato (IT)
(74) Representative: Firmati, Leonardo

(56) References cited:
- WO-A1-2020/250139
- CN-U- 201 542 153
- KR-A- 20100 034 512
- US-A1- 2004 126 580
- US-A1- 2016 214 219

## Description

The invention relates to a machine for forming mattresses or panels from non-solid material.

The invention also relates to a respective method for forming mattresses or panels from non-solid material The term "mattress" or "panel" is used to mean a solid product having variable density and consisting of a majority of material which is non-solid in the fibrous or flock state and a minimum part of adhesive material designed to make the fibrous or flock material cohesive and solid.

The quantity of adhesive may vary until being reduced to zero as a function of the fact that the non-solid material is or is not processed by mechanical devices such as to interlace and cross the fibres together (for example, by needle punching).

Currently, there are machines for forming mattresses or panels comprising a first station for loading the material to be compacted in the form of a mattress, a second processing station, for example comprising cylinders and lastly a pressing station for imparting a preset density and a predetermined final thickness to the mattress at the outlet.

The density of the mattress at the outlet, as well as the thickness, are selected by the user of the machine as a function of the final application of the mattress. Merely by way of an example, if the final product to be obtained must have filling characteristics the density will be minimum and the thickness will be high, on the contrary, if the final mattress must have minimum mechanical structural characteristics, the density will be maximum and the thickness low.

The processing station of the prior art machines generally comprises a main cylinder, the so-called "drum", rotating in a single direction of rotation and designed to transfer the fibres of non-solid material from the loading station to the pressing station. During the movement of the fibres on the drum, they are processed thanks to the mechanical action of the drum with at least one further processing cylinder positioned in contact with it.

The pressing station generally comprises a lower feed belt and an upper opposite cylinder.

Moreover, the lower belt and the upper cylinder are configured for counter-rotating in order to move forward the mattress being formed, keeping it pressed.

Whilst the prior art machines allow mattresses to be made from non-solid materials they cannot be modulated in the various processing operations which can be obtained.

In effect, the prior art machines allow a single processing to be performed and do not, therefore, allow significant variations in the end product which can be obtained with the same non-solid starting material. This drawback is particularly significant since it does not allow the user of the prior art machines to have a single machine to obtain different products required by the market, forcing the purchase and use of specific machines as a function of the various products required by the market.

A prior art machine is described in patent document WO2020/250139.

The aim of the invention is to provide a machine for forming mattresses or panels from non-solid material which allows different mattresses to be obtained, even starting from the same starting material.

In particular, the aim of the invention is to provide a machine for forming mattresses or panels from non-solid material which allows mattresses or panels to be obtained with a single machine which can be subjected to different processing operations in the machine.

A further aim of the invention is to provide a method for forming mattresses or panels from non-solid material which overcomes the drawbacks of the prior art and allows optimisation of the production process for the above-mentioned mattresses or panels made of non-solid material.

The above-mentioned aims are achieved by a machine and a method for forming mattresses or panels from non-solid material which comprise the technical features described in one or more of the appended claims.

Further features and advantages of this invention are more apparent in the description below, with reference to preferred, non-limiting embodiments of a machine and a method for forming mattresses or panels from non-solid material, as illustrated in the accompanying drawings, in which:
- Figure 1 is a cross section of a machine for forming mattresses or panels from non-solid material according to the invention in a first operating configuration and
- Figure 2 is a cross section of a machine for forming mattresses or panels from non-solid material in a second operating configuration.

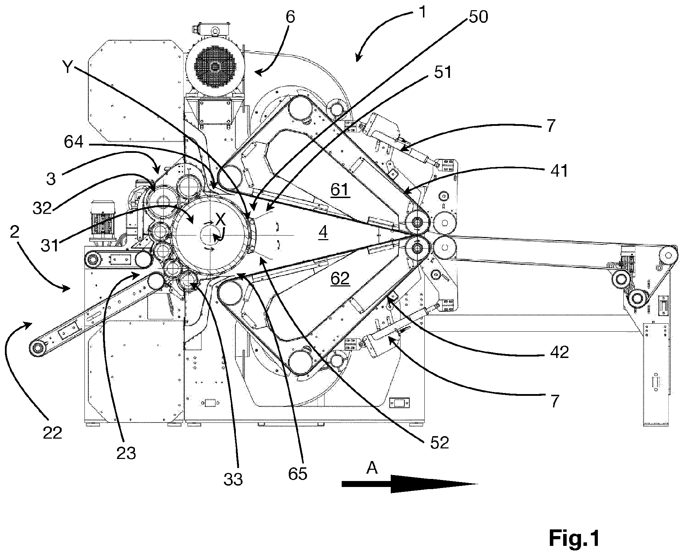

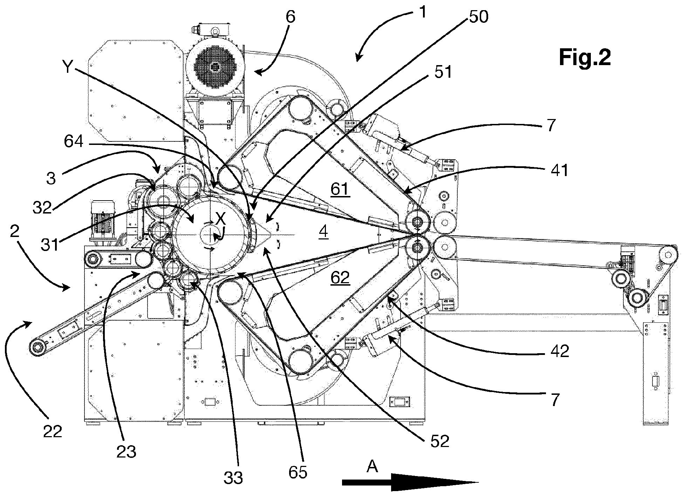

A machine is described below with reference to Figures 1 and 2 for forming mattresses or panels from non-solid material according to the invention.

The numeral 1 denotes in its entirety a machine for forming mattresses or panels from non-solid material. In order to obtain a large mattress or panel it is necessary that a predetermined percentage of additive materials be added to the plurality of non-solid materials which perform the function of tacking together the non-solid materials and connecting them to each other.

It is also possible to make the non-solid materials solid by providing a mechanical processing such as, for example, needle punching.

The additive materials may be, for example, two-part components, powders or liquids which can be activated at ambient temperature or at higher temperatures.

In this regard, advantageously, a machine 1 for forming mattresses or panels from non-solid material comprises, in addition to the various stations described below, also a station for heating the mattress or panel being formed.

Merely by way of an example, the heating station is of the type using hot air, steam and/or comprising electrical resistors or fuel burners.

It is understood that the heating station may be positioned either upstream or downstream of the machine 1 according to the invention.

The machine 1 for forming mattresses or panels according to the invention comprises a loading station 2 having an inlet 22 and an outlet 23 for a non-solid material.

The term "non-solid material" means, for example, fibres derived from the recycling of fabrics, non-woven fabrics, paper, plastic or in any case fibres or waste of any material which can, by means of a shredding step, be reduced to fibres or pieces with dimensions of from 1 mm to 100 mm.

Advantageously, the loading station 2 extends longitudinally between the inlet portion 22 and the outlet portion 23 inclined at a positive angle (the material passes through the station along an upwards direction) of between 25° and 75° relative to the advancement and forming direction (A). Advantageously, the angle of inclination is between 45 and 60 degrees upwards with respect to the horizontal, as shown in the drawings.

The machine 1 also comprises a processing station 3 operatively connected to the outlet portion 23 of the loading station 2.

The processing station 3 comprises a first processing cylinder 31 (called "drum") and at least a second processing cylinder 32.

The first cylinder 31 and the at least a second processing cylinder 32 act in conjunction with each other to perform the mechanical processing on the non-solid material.

Depending on the type of non-solid material being processed, the second processing cylinder 32 may comprise a pair or a plurality of cylinders and/or rotating counter-rotating rollers configured to transport in an optimised fashion the material arriving from the outlet portion 23 to the first processing cylinder 31.

The first processing cylinder 31, that is to say, the cylinder which performs the main processing function determined as a function of the material being processed, advantageously comprises a cylinder fitted with rigid seals, slats with cylindrical tips or with segments. The second processing cylinder(s) 32 also advantageously comprise a cylinder fitted with rigid seals, with slats with cylindrical tips or with segments.

The function of the processing station 3 is to mix and intertwine in an adequate manner the fibres of the non-solid material which will form the mattress or panel. The machine 1 according to the invention also comprises a pressing station 4 positioned downstream of the processing station 3.

The pressing station 4 comprises two first conveyor belts 41 and 42, one upper 41 and one lower 42, counter-rotating relative to each other in such a way that the relative movement corresponds to the advancement direction (A).

The two conveyor belts 41, 42 are movable towards each other for pressing the mattress or panel being formed. As shown in the drawings, the two first belts 41, 42 may be positioned relative to each other in such a way as to form between them an intermediate zone with a cone cross section having the tip downstream relative to the processing station 3 along the advancement direction (A) .

In this way it is possible to obtain an increasing pressing in a uniform manner on the mattress or panel being formed.

According to the embodiment illustrated in the accompanying drawings both the belts 41, 42 are movable towards and away from each other.

Advantageously, the conveyor belts 41, 42 are perforated and permeable to air.

The first processing cylinder 31 is motor-driven and designed to rotate with respect to a relative central axis X, as shown in the drawings, in both directions of rotation.

The first cylinder 31 and a predetermined second cylinder 32 act in conjunction only when the first cylinder 31 rotates in a direction of rotation (clockwise or anticlockwise).

In effect, with reference to the drawings, if the first processing cylinder 31 rotates clockwise, the processing will be performed by the contact and cooperation with the second processing cylinder 32, otherwise, in the case of rotation of the first cylinder 31 in an anticlockwise direction, the non-solid material is not passed through the second cylinder 32 but, rather, through the lower portion of the first cylinder 31 in order to perform a second different type of processing. In this regard, advantageously, in the machine 1 according to the invention the outlet 23 of the loading station 2 faces the first processing cylinder 31 and comprises a third processing cylinder 33.

The third processing cylinder 33 is, for example, different in terms of shape and type, in such a way that acting in conjunction with the first cylinder 31 it performs a processing different from that performed by the second cylinder 32.

More in detail, as shown in the drawings, the second 32 and third 33 processing cylinder face the periphery of the first processing cylinder 31 on opposite sides of the loading station 2.

In particular, therefore, in the configuration shown in the drawings, if the first cylinder 31 rotates in a clockwise direction on the relative axis X the non-solid material is processed by the first 31 and second 32 cylinder pair (and the third cylinder 33 is irrelevant) whilst if the first cylinder 31 rotates in an anticlockwise direction with respect to the relative axis X the non-solid material is processed by the first 31 and third 33 cylinder pair (and the second cylinder 32 is irrelevant).

It is understood that in the configuration in which the third processing cylinder 33 is not present (or is moved away from the contact with the first cylinder 31) the second trajectory of the material followed when the first cylinder rotates anticlockwise does not perform any processing, acting as a by-pass.

Advantageously, the machine 1 according to the invention also comprises a drive device 50, positioned close to the periphery of the first processing cylinder 31 and interposed between the two conveyor belts 41, 42 of the pressing station 4.

The drive device 50 is configured for directing the non-solid material processed and moved from the first processing cylinder 31 towards the pressing station 4. Advantageously, the drive device 50 comprises a deflector 51, 52 which is movable so as to oscillate about a respective axis of oscillation (Y), which is positioned parallel to the central axis (X) of the first cylinder 31.

The deflector 51, 52 is made in the form of a band, advantageously made of a rigid material, for example metal or plastic.

Advantageously, the drive device 50 also comprises motor means and a respective control unit configured to regulate the frequency and the oscillation amplitude of the deflector 51, 52.

The drawings show an embodiment in which the drive device 50 comprises two deflectors 51, 52, each of which operates selectively with a respective direction of rotation of the first cylinder 31.

Advantageously, the machine 1 according to the invention also comprises a suction station 6 having at least one suction portion 61, 62 positioned at least at one of the conveyor belts 41, 42 and at least one emission portion 64, 65 of at least one jet of air located at said first processing cylinder 31.

Advantageously, moreover, the suction station 6 comprises two suction portions 61, 62 positioned facing each another.

The opposite suction allows the fibres to be oriented in a predetermined manner, that is to say, substantially perpendicular to the advancement direction (A) such that a volumizing is obtained or a greater order in the arrangement of the fibres and, therefore, a greater density is obtained.

The jet of air is directed towards the pressing station 4 along the advancement direction (A) in a zone interposed between the conveyor belts 41, 42.

The jet of air generated by the emission portions 64, 65 facilitates the detachment of the fibres of non-solid material from the first cylinder 31 and directing them towards the pressing station.

In the case of an embodiment comprising the drive device 50, the air jets are directed on respective deflectors 51, 52 in such a way as to direct the fibres to predetermined zones of the pressing station 4.

For example, if the deflectors 51, 52 are actuated to move with a constant oscillating direction (relative to the axis (Y)) a "concertina" and uniform distribution of the non-solid material inside the entire pressing station 4 will be obtained.

Advantageously, moreover, the suction station 6 is configured for working substantially in a closed loop; in effect, the air sucked for example by a suction device is drawn from the first pressing station 4 by the portions 61 and 62 and the air is blown by the emission portions 64, 65 into the intermediate portion of the two conveyor belts 41, 42.

In this way the air consumption is reduced to a minimum, if not completely set to zero.

Advantageously, moreover, the machine 1 according to the invention comprises a movement device 7 designed to move towards each other the conveyor belts 41, 42 of the pressing station 4 and therefore perform a vertical pressing operation, that is to say, substantially perpendicular to the advancement direction (A).

Advantageously, the movement device 7 comprises electro-actuated means, for example a pneumatic or hydraulic actuator which is actuated under command by, for example, a respective electric motor.

Advantageously, moreover, the movement device 7 is configured for moving at least the upper belt 41 of the pressing station 4 in such a way that it does not maintain a position parallel to the lower belt 42, that is to say, forming an intermediate portion for passage of the mattress or panel being formed in the form of a cone, with the tip of the cone facing towards the outlet of the machine 1.

The invention also relates to a method for forming mattresses or panels from non-solid material comprising a first step of feeding a quantity of non-solid material, advantageously continuously, to a processing station 3 comprising a first processing cylinder 31 on which the non-solid material engages.

The material is then conditioned in the processing station 3 during the transport performed by the first processing cylinder 31.

The method then comprises a step of transferring the non-solid material from the first processing cylinder 31 to a pressing station 4 positioned downstream of the processing station 3.

Simultaneously with the two directions of rotation (clockwise or anticlockwise) of the first processing cylinder 31 two different steps for conditioning the non-solid material are implemented.

The invention brings important advantages, overcoming the limitations and drawbacks of the prior art.

A first important advantage consists in the fact that a machine 1 according to the invention can perform at least two different types of processing even with the same amount of non-solid starting material, making the machine 1 very adaptable to the most diverse requirements of the market.

A further advantage achieved by a horizontal former 1 according to the invention consists in the fact that between the loading station 2 and the final portion of the last pressing station there are no stretches of forming path having angles of less than 135°, the presence of which would adversely affect the consistency of the mattress or panel being formed.

This avoids the risk of breakages or tears of the braids formed by means of the processing station.

## Claims

1. A forming machine (1) to form mattresses or panels from a non-solid material comprising:
- a loading station (2) having one inlet (22) and one outlet (23) of a non-solid material,
- - a processing station (3) operatively connected to said outlet (23) of said loading station (2) and comprising a first processing cylinder (31), said processing station (3) further comprising a second processing cylinder (32), said first processing cylinder (31) acting in conjunction with said second processing cylinder (32),
- - a pressing station (4) arranged downstream of said processing station (3) and comprising two conveyor belts (41, 42) counter rotating along an advancement direction (A), said two conveyor belts (41, 42) being movable towards each other to press said mattress or panel being formed, said machine (1) being **characterised in that** said first processing cylinder (31) is motorised and designed to rotate with respect to its own central axis (X) in both directions of rotation, said cylinders (31, 32) acting in conjunction in only one of said directions of rotation.

2. The machine (1) according to claim 1, wherein said outlet (23) of said loading station (2) faces said first processing cylinder (31), **characterised in that** it comprises a third processing cylinder (33), said second (32) and third (33) processing cylinders facing the periphery of said first processing cylinder (31) from opposite sides of said loading station (2).

3. The machine (1) according to any one of the preceding claims, wherein said conveyor belts (41, 42) are perforated and permeable to air.

4. The machine (1) according to any one of the preceding claims, further comprising a drive device (50) positioned near the periphery of said first processing cylinder (31) and interposed between said two conveyor belts (41, 42), said drive device (50) being configured to direct said non-solid material processed and moved by said first processing cylinder (31) to said pressing station (4).

5. The machine (1) according to the preceding claim, wherein said drive device (50) comprises a deflector (51, 52) movable to oscillate around a respective oscillation axis (Y) parallel to said central axis (X) of said first cylinder (31).

6. The machine (1) according to the preceding claim, wherein said drive device (50) comprises motor means and a respective control unit configured to regulate the frequency and amplitude of oscillation of said deflector (51, 52).

7. The machine (1) according to any one of claims 4 to 6, wherein said drive device (50) comprises two deflectors (51, 52), each selectively operating with a respective direction of rotation of said first cylinder (31) .

8. The machine (1) according to any one of the preceding claims, further comprising a suction station (6) having at least one suction portion (61, 62) positioned at least at one of said conveyor belts (41, 42) and at least one emission portion (64, 65) of at least one jet of air, positioned at said first processing cylinder (31), said at least one jet of air being directed toward said pressing station (4) along the advancement direction (A) in an area interposed between said conveyor belts (41, 42).

9. The machine (1) according to the preceding claim, wherein said suction station (6) comprises two suction portions (61, 62) positioned facing each other.

10. A method for forming mattresses or panels from non-solid material comprising the steps of:
- - feeding said non-solid material to a processing station (3) comprising a first processing cylinder (31) on which said non-solid material is engaged,
- - conditioning said non-solid material at said processing station (3) during the transportation performed by said first processing cylinder (31),
- transferring said non-solid material from said first processing cylinder (31) to a pressing station (4) positioned downstream of said processing station (3), said method being **characterised in that** simultaneously with the two directions of rotation of said first processing cylinder (31) two different steps of conditioning said non-solid material are implemented.

## Patentansprüche

1. Herstellungsmaschine (1) zur Herstellung von Matratzen oder Platten aus nichtfestem Material, umfassend
- eine Ladestation (2), aufweisend einen Einlass (22) und einen Auslass (23) eines nichtfesten Materials;
- eine Verarbeitungsstation (3), die betriebswirksam mit dem Auslass (23) der Ladestation (2) verbunden ist und einen ersten Verarbeitungszylinder (31) umfasst, wobei die Verarbeitungsstation (3) zudem einen zweiten Verarbeitungszylinder (32) umfasst und der erste Verarbeitungszylinder (31) in Verbindung mit dem zweiten Verarbeitungszylinder (32) wirkt;
- eine Pressstation (4), die stromabwärts der Verarbeitungsstation (3) angeordnet ist und zwei Förderbänder (41, 42) umfasst, die sich gegenständig entlang einer Vorschubrichtung (A) drehen, wobei die beiden Förderbänder (41, 42) hinführend zueinander bewegbar sind, um die herzustellende Matratze oder Platte zu bewegen, wobei die Maschine (1) **dadurch gekennzeichnet ist, dass** der erste Verarbeitungszylinder (31) motorbetrieben und ausgestaltet ist, um sich in Bezug auf seine eigene mittige Achse (X) in beide Rotationsrichtungen zu drehen, wobei die Zylinder (31, 32) in Verbindung in nur eine der Rotationsrichtungen wirken.

2. Maschine (1) nach Anspruch 1, wobei der Auslass (23) der Ladestation (2) dem ersten Verarbeitungszylinder (31) zugewandt ist, **dadurch gekennzeichnet, dass** sie einen dritten Verarbeitungszylinder (33) umfasst, wobei der zweite (32) und der dritte (33) Verarbeitungszylinder dem Umfang des ersten Verarbeitungszylinders (31) von entgegengesetzten Seiten der Ladestation (2) zugewandt sind.

3. Maschine (1) nach einem der vorhergehenden Ansprüche, wobei die Förderbänder (41, 42) perforiert und luftdurchlässig sind.

4. Maschine (1) nach einem der vorhergehenden Ansprüche, zudem umfassend eine Antriebsvorrichtung (50), die in der Nähe des Umfangs des ersten Verarbeitungszylinders (31) positioniert und zwischen den zwei Förderbändern (41, 42) eingesetzt sind, wobei die Antriebsvorrichtung (50) ausgelegt ist, um das nichtfeste verarbeitete und vom ersten Verarbeitungszylinder (31) bewegte Material zur Pressstation (4) zu lenken.

5. Maschine (1) nach dem vorhergehenden Anspruch, wobei die Antriebsvorrichtung (50) einen Ablenker (51, 52) umfasst, der bewegbar ist, um rund um eine jeweilige Schwingachse (Y) parallel zur mittigen Achse (X) des ersten Zylinders (31) zu schwingen.

6. Maschine (1) nach dem vorhergehenden Anspruch, wobei die Antriebsvorrichtung (50) Motormittel und eine jeweilige Steuereinheit umfasst, ausgelegt, um die Schwingungsfrequenz und -amplitude des Ablenkers (51, 52) zu regeln.

7. Maschine (1) nach einem der Ansprüche 4 bis 6, wobei die Antriebsvorrichtung (50) zwei Ablenker (51, 52) umfasst, die jeweils selektiv mit einer jeweiligen Rotationsrichtung des ersten Zylinders (31) arbeiten.

8. Maschine (1) nach einem der vorhergehenden Ansprüche, zudem umfassend eine Saugstation (6), aufweisend mindestens einen Saugabschnitt (61, 62), der mindestens an einem der Förderbänder (41, 42) positioniert ist, und mindestens einen Ausgabeabschnitt (64, 65) von mindestens einem Luftstrahl, der am ersten Verarbeitungszylinder (31) positioniert ist, wobei der mindestens eine Luftstrahl entlang der Vorschubrichtung (A) hinführend zur Pressstation (4) in einen Bereich gelenkt wird, der zwischen den Förderbändern (41, 42) eingesetzt ist.

9. Maschine (1) nach dem vorhergehenden Abschnitt, wobei die Saugstation (6) zwei Saugabschnitte (61, 62) umfasst, die einander zugewandt positioniert sind.

10. Verfahren zur Herstellung von Matratzen oder Platten aus nichtfestem Material, umfassend die folgenden Schritte:
- - Zuführen des nichtfesten Materials zu einer Verarbeitungsstation (3), umfassend einen ersten Verarbeitungszylinder (31), auf dem das nichtfeste Material im Eingriff ist;
- - Aufbereiten des nichtfesten Materials an der Verarbeitungsstation (3) während der vom ersten Verarbeitungszylinder (31) durchgeführten Beförderung;
- Transferieren des nichtfesten Materials vom ersten Verarbeitungszylinder (31) zu einer Pressstation (4), die stromabwärts der Verarbeitungsstation (3) positioniert ist, wobei das Verfahren **dadurch gekennzeichnet ist, dass** gleichzeitig mit den beiden Rotationsrichtungen des ersten Verarbeitungszylinders (31) zwei unterschiedliche Schritte zum Aufbereiten des nichtfesten Materials durchgeführt werden.

## Revendications

1. Machine de formage (1) pour former des matelas ou des panneaux à partir d'un matériau non solide, comprenant :
- un poste de chargement (2) ayant une entrée (22) et une sortie (23) d'un matériau non solide,
- un poste de traitement (3) opérationnellement relié à ladite sortie (23) dudit poste de chargement (2) et comprenant un premier cylindre de traitement (31), ledit poste de traitement (3) comprenant en outre un second cylindre de traitement (32), ledit premier cylindre de traitement (31) agissant conjointement avec ledit second cylindre de traitement (32),
- un poste de pressage (4) disposé en aval dudit poste de traitement (3) et comprenant deux bandes transporteuses (41, 42) tournant à contresens le long d'un sens d'avancement (A), lesdites deux bandes transporteuses (41, 42) étant mobiles l'une vers l'autre pour presser ledit matelas ou panneau en cours de formation, ladite machine (1) étant **caractérisée en ce que** ledit premier cylindre de traitement (31) est motorisé et conçu pour tourner par rapport à son propre axe central (X) dans les deux sens de rotation, lesdits cylindres (31, 32) agissant conjointement dans un seul desdits sens de rotation.

2. Machine (1) selon la revendication 1, dans laquelle ladite sortie (23) dudit poste de chargement (2) fait face audit premier cylindre de traitement (31), **caractérisée en ce qu'**elle comprend un troisième cylindre de traitement (33), lesdits deuxième (32) et troisième (33) cylindres de traitement faisant face à la périphérie dudit premier cylindre de traitement (31) depuis des côtés opposés dudit poste de chargement (2).

3. Machine (1) selon l'une quelconque des revendications précédentes, dans laquelle lesdites bandes transporteuses (41, 42) sont perforées et perméables à l'air.

4. Machine (1) selon l'une quelconque des revendications précédentes, comprenant en outre un dispositif d'entraînement (50) positionné près de la périphérie dudit premier cylindre de traitement (31) et interposé entre lesdites deux bandes transporteuses (41, 42), ledit dispositif d'entraînement (50) étant configuré pour diriger ledit matériau non solide traité et déplacé par ledit premier cylindre de traitement (31) vers ledit poste de pressage (4).

5. Machine (1) selon la revendication précédente, dans laquelle ledit dispositif d'entraînement (50) comprend un déflecteur (51, 52) mobile pour osciller autour d'un axe d'oscillation respectif (Y) parallèle audit axe central (X) dudit premier cylindre (31).

6. Machine (1) selon la revendication précédente, dans laquelle ledit dispositif d'entraînement (50) comprend des moyens moteurs et une unité de commande respective configurée pour réguler la fréquence et l'amplitude d'oscillation dudit déflecteur (51, 52).

7. Machine (1) selon l'une quelconque des revendications 4 à 6, dans laquelle ledit dispositif d'entraînement (50) comprend deux déflecteurs (51, 52), chacun fonctionnant sélectivement avec un sens de rotation respectif dudit premier cylindre (31).

8. Machine (1) selon l'une quelconque des revendications précédentes, comprenant en outre un poste d'aspiration (6) ayant au moins une portion d'aspiration (61, 62) positionnée au niveau d'au moins l'une desdites bandes transporteuses (41, 42) et au moins une portion d'émission (64, 65) d'au moins un jet d'air, positionnée au niveau dudit premier cylindre de traitement (31), ledit au moins un jet d'air étant dirigé vers ledit poste de pressage (4) le long de la direction d'avancement (A) dans une zone interposée entre lesdites bandes transporteuses (41, 42).

9. Machine (1) selon la revendication précédente, dans laquelle ledit poste d'aspiration (6) comprend deux portions d'aspiration (61, 62) positionnées l'une en face de l'autre.

10. Procédé pour former des matelas ou des panneaux à partir d'un matériau non solide, comprenant les étapes de :
- - alimenter ledit matériau non solide vers un poste de traitement (3) comprenant un premier cylindre de traitement (31) sur lequel ledit matériau non solide est engagé,
- - conditionner ledit matériau non solide au niveau dudit poste de traitement (3) pendant le transport effectué par ledit premier cylindre de traitement (31),
- transférer ledit matériau non solide dudit premier cylindre de traitement (31) vers un poste de pressage (4) positionné en aval dudit poste de traitement (3), ledit procédé étant **caractérisé en ce que** simultanément aux deux sens de rotation dudit premier cylindre de traitement (31), deux étapes différentes de conditionnement dudit matériau non solide sont mises en oeuvre.
